# EUROPEAN PATENT APPLICATION

(11) **EP 3 270 324 A1**
(43) Date of publication of application: **17.01.2018**
(21) Application number: 17178469.7
(22) Date of filing: 28.06.2017
(51) Int. Cl.: G06K 7/10

(54) **BARCODE READER WITH VIEWING FRAME**

(30) Priority: 15.07.2016 CN 201610557620; 13.06.2017 US 201715620889
(71) Applicant: Hand Held Products, Inc., Fort Mill, SC 29707 (US)
(72) Inventor: YIN, Jun, Morris Plains, NJ 07950 (US); OUYANG, Yunxin, Morris Plains, NJ 07950 (US); LV, Liangwei, Morris Plains, NJ 07950 (US); WANG, Lin, Morris Plains, NJ 07950 (US)
(74) Representative: Houghton, Mark Phillip

(57) **Abstract**

Barcode reading devices for creating an easy-to-use experience are provided. In one implementation, a barcode reading apparatus comprises a housing having at least a scan body and an image sensor disposed within the housing. The image sensor is configured to read the barcode. The apparatus further includes a scanning frame and a viewing frame. The scanning frame is formed in a first bottom surface of the scan body and is configured to enable the image sensor to visually detect the barcode when the barcode is placed in a scanning zone at least partially below the scan body. The viewing frame is formed in a first top surface of the scan body and is configured to enable a user to view the barcode through both the viewing frame and scanning frame when the barcode is placed in the scanning zone.

## Description

### CROSS- REFERENCE TO RELATED APPLICATION

The present application claims the benefit of Chinese Patent Application for Invention No. 201610557620.4 for a *Barcode Reader with Viewing Frame* filed at the State Intellectual Property Office of the People's Republic of China on July 15, 2016. The foregoing patent application is hereby incorporated by reference in its entirety.

### FIELD OF THE INVENTION

The present invention relates to devices for reading barcodes and more particularly relates to user-intuitive barcode readers.

### BACKGROUND

The technology regarding barcodes and barcode readers has advanced significantly over the past couple decades. Conventional barcode readers, or laser scanners, are designed to scan laser beams across a barcode, but are normally only capable of reading barcodes that are printed on a paper-based medium. However, many barcodes can now be displayed on the LCD or LED screens of mobile devices rather than on paper. Therefore, new barcode reading technologies have been developed to account for illuminated barcodes as opposed to the traditional barcodes that merely reflect laser light.

When a customer uses a mobile device, such as a smart phone, to display a barcode, there are some potential issues that may arise in the barcode reading process. For instance, the customer may need to hand the mobile device to a cashier, who may then swipe the mobile device over a scanner. In some circumstances, the customers may not want strangers handling their mobile device, perhaps because of privacy concerns or because of concerns that the cashier may mishandle the mobile device.

In other situations, a customer may turn the screen of the mobile device toward the cashier for scanning. However, other problems may arise in this scenario in which the screen is turned away from the customer. For instance, the screen may accidentally be switched to a different display that does not show the barcode, may be fading to black, or may be automatically turned off without the customer being aware of what is being displayed.

These and other issues may be common when mobile devices are used to display barcodes. Therefore, a need exists for providing a barcode reader that is easy to use and that overcomes the problems mentioned above.

### SUMMARY

Accordingly, the present invention embraces barcode reading devices for providing an easy-to-use, intuitive experience for the customer. In an exemplary embodiment, a barcode reading apparatus includes a housing having at least a scan body. Also, the apparatus includes an image sensor disposed within the housing, the image sensor being configured to read a barcode. The barcode reading apparatus further includes a scanning frame formed in a first bottom surface of the scan body and a viewing frame formed in a first top surface of the scan body. The scanning frame is to enable the image sensor to visually detect the barcode when the barcode is placed in a scanning zone at least partially below the scan body. The viewing frame is configured to enable a user to view the barcode through both the viewing frame and scanning frame when the barcode is placed in the scanning zone.

In another exemplary embodiment, an image sensing device comprises a camera disposed within a housing, wherein the camera is configured to read a barcode displayed on a mobile electronic device. The image sensing device further comprises a scanning frame formed in a downwardly-facing surface of the housing. The scanning frame enables the camera to visually detect the barcode when the barcode is placed in a scanning zone at least partially below the scanning frame. Also included is a viewing frame formed in an upwardly-facing surface of the housing. The viewing frame is configured to enable a user to view the barcode through both the viewing frame and scanning frame when the barcode is placed in the scanning zone.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

FIG. 1 schematically depicts a perspective view of a barcode reader according to an exemplary embodiment of the present invention.
FIG. 2 schematically depicts a front view of the barcode reader of FIG. 1, according to an embodiment of the present invention.
FIG. 3 schematically depicts a cross-sectional side view of the barcode reader of FIG. 1, according to an embodiment of the present invention.
FIG. 4 schematically depicts a cross-sectional side view of the barcode reader of FIG. 1, according to another embodiment of the present invention.

### DETAILED DESCRIPTION

The present invention is directed to barcode readers that are easy to use and provide a positive user experience. The barcode readers of the present invention are designed to allow a customer to personally scan the barcode in a manner that is intuitive and allows the customer to see the entire scanning operation.

In an exemplary embodiment, the barcode readers of the present invention may include a self-standing housing that has a sensing field of view directed in a downward manner. Also, the barcode readers may include a viewing frame or window in a top portion of a housing of the barcode readers to enable the user to view the barcode as it is being placed in a position to be scanned.

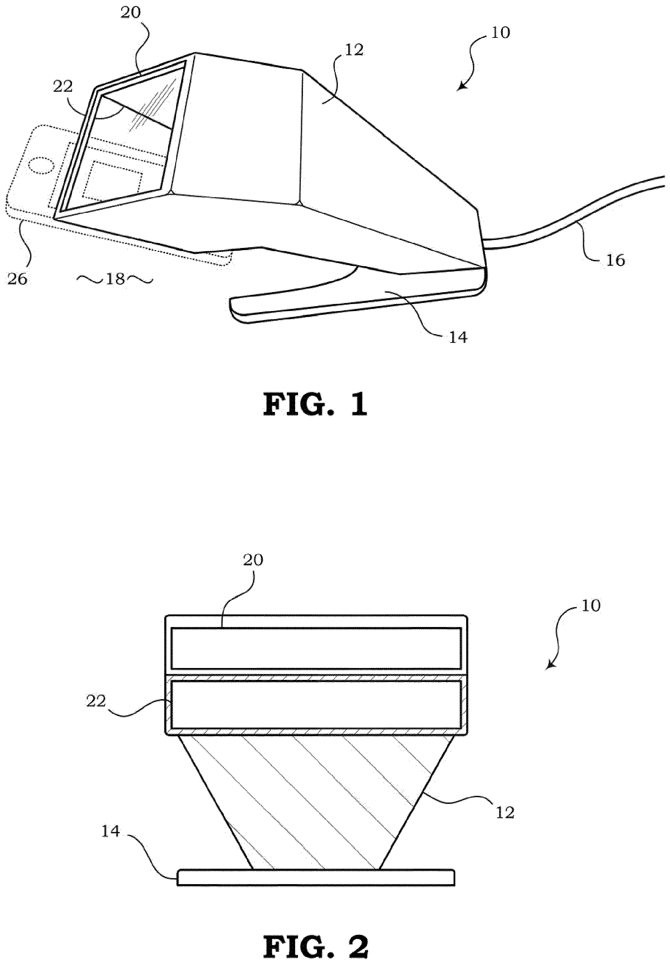

FIG. 1 is a diagram illustrating a perspective view of an embodiment of a barcode reader 10. As shown in FIG. 1, the barcode reader 10 generally includes a housing 12, a base 14, and a cable 16. The housing 12 extends from the base 14 at an angle so that a portion of the housing 12 is positioned above a scanning zone 18. The base 14 may have a relatively flat bottom portion to allow the base 14 to sit securely on a horizontal surface, such as the top of a counter or table. The cable 16 is configured to communicate electrical signals between the barcode reader 10 and a computing device (not shown), such as a host computer, point-of-sale (POS) device, cash register, or other device configured to process barcode information.

In particular, the barcode reader 10 is configured such that the housing 12 includes a viewing frame 20 and a scanning frame 22. The viewing frame 20 is formed in a top portion of the housing 12 and allows a user to view a scanning operation through the viewing frame 20 when the user's eyes are at a level that is higher than the top portion of the housing 12. In some embodiments, the viewing frame 20 may be formed in a section of the housing 12 that is sloped slightly downward, as shown, thereby tilting the viewing frame 20 at an angle that may makes it easy for a user to see the barcode being scanned. More particularly, the viewing frame 20 is angled in a way that the user (i.e., the customer) is able to perform the scanning himself or herself.

The scanning frame 22 is formed in a bottom portion of the housing 12 and allows a barcode to be read by barcode circuitry within the housing 12, which is described in more detail below. In some embodiments, the scanning frame 22 may be tilted at an angle to extend the scanning zone 18 slightly in front of the housing 12. When a user places a barcode underneath the housing 12 and within the scanning zone 18, the user can see the barcode through both the viewing frame 20 and scanning frame 22 while the barcode is being scanned. According to some embodiments, the barcode reader 10 may be configured to scan the barcode from a mobile device, such as the mobile device 26 shown in FIG. 1.

The viewing frame 20 may be configured to support a pane of glass, plastic, or other material. The pane may be sufficiently transparent and/or translucent to allow the user to see the scanning operations without the need for the user to move his or her head or look around other obstacles. In some embodiments, the pane may include a filter to reduce the effects of electromagnetic radiation on the user. Therefore, the configuration of the barcode reader 10 as disclosed in FIG. 1 provides a user-friendly experience. Also, the user's mobile device 26 can be kept within view at all times during the scanning process to reduce the risk of mishandling by others and to ensure the user that the screen of the mobile device 26 is properly displaying the barcode as needed for proper scanning.

FIG. 2 is a front view of the embodiment of the barcode reader 10 of FIG. 1. The viewing frame 20 is directed upward and the scanning frame is directed downward. According to some embodiments, the viewing frame 20 may be about the same size as the scanning frame 22. Also, the viewing frame 20 and scanning frame 22 are substantially aligned with each other.

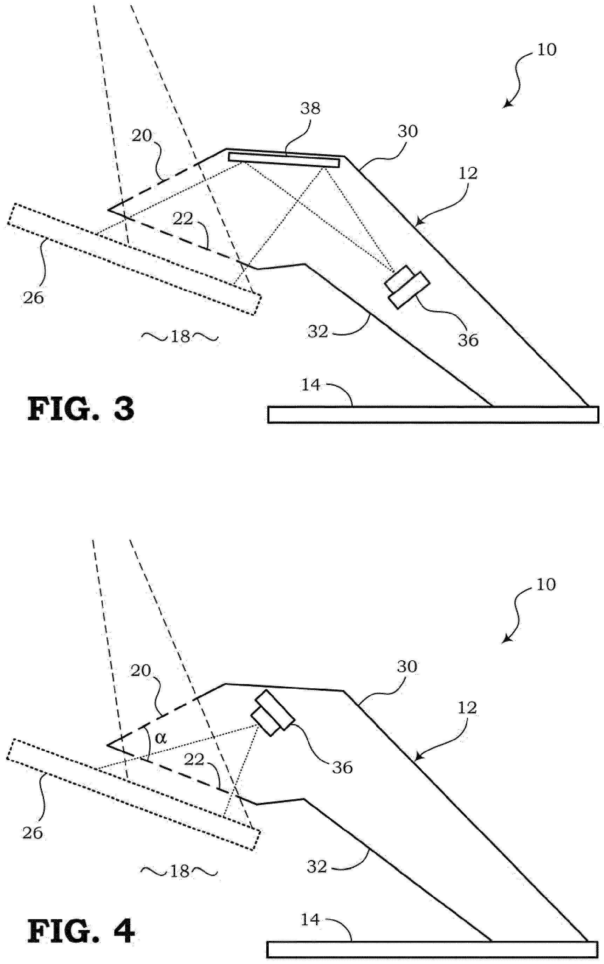

FIGS. 3 and 4 are diagrams illustrating cross-sectional side views of various embodiments of the barcode reader 10 of FIG. 1. The housing 12 can be defined by a scan body 30 and a trunk 32. It should be noted that the trunk 32 is connected to the base 14 at an angle such that at least some portions of the scan body 30 extend over the scanning zone 18.

The viewing frame 20 is formed in a top surface of the scan body 30. In some embodiments, the surface that includes the viewing frame 20 may be tilted at an angle, as shown. Also, the scanning frame 22 is formed in a bottom surface of the scan body 30 and may also be tilted at an angle. According to some embodiments, an angle α formed between the surfaces in which the viewing frame 20 and scanning frame 22 are respectively contained may be an acute angle.

FIG. 3 shows a first embodiment of the barcode reader 10 including an image sensor 36 and a mirror 38. In this embodiment of FIG. 3, the image sensor 36 is disposed in the trunk 32 of the housing 12 and is directed upward at an angle toward a top portion of the scan body 30. The mirror 38 is disposed in the scan body 30, preferably near the top of the scan body 30, and enables the image sensor 36 to attain a field of view of the barcode that is placed in the scanning zone 18. The field of view of the image sensor 36 is outlined in FIG. 3 with dotted lines and includes a view through the scanning frame 22 in the bottom portion of the scan body 30. This bottom portion in which the scanning frame 22 is formed may be tilted with respect to the base 14.

FIG. 4 illustrates a second embodiment of the barcode reader 10, including the image sensor 36 but not including the mirror 38 shown in FIG. 3. In this embodiment, the image sensor 36 is disposed in the scan body 30 of the housing 12 and is directed downward toward the scanning zone 18 with a direct, unreflecting view of the scanning zone 18 through the scanning frame 22. According to some embodiments, the scanning frame 22 may support a transparent and/or translucent substrate, which may include light filtering capabilities.

The image sensor 36 may be configured in different ways depending on the particular application in which it is used. For example, if designed with barcodes primarily displayed on mobile devices 26, the image sensor 36 may be a camera for capturing an image of the barcode. The captured image can be processed by a suitable image processing circuit included in the housing 12 of the barcode reader 10 or in the host computer or other device connected to the barcode reader 10 through the cable 16. When incorporated in the housing 12, the image processing circuit may be disposed in the trunk 32 of the housing 12.

According to various embodiments, the image sensor may include an imaging lens having a small f-stop number, which allows the barcode reader 10 to receive as much light as possible. In this way, the image sensor 36 may be able to suitably detect the barcode at different areas within the scanning zone 18.

In other embodiments, the image sensor 36 may be configured as a laser scanner. The laser scanner may include a laser source, laser directing elements, and light sensors for reading the barcode.

The image sensor 36 may include any suitable types of light sensing elements. For example, the light sensing elements may include charge-coupled devices (CCDs) or other digital light sensitive components.

It should be noted that a user can observe the barcode as it is being placed under the scan body 30 and into the scanning zone 18. The user's field of view may be directed as shown in FIGS. 3 and 4, which is downward through the viewing frame 20 and through the scanning frame 22. In the illustrated examples, the barcode is displayed on the mobile device 26. Also, by configuring the barcode reader 10 as shown in the figures, the field of view of the image sensor 36 is directed downward through the scanning frame 22. With the downward view, the user places the barcode face-up within the scanning zone 18 such that the barcode can be read by the image sensor 36 at the same time that the user can view the barcode as it is being scanned. The barcode reader 10, as defined in the present disclosure, therefore provides an easy to use, intuitive apparatus without the potential problems inherent in the conventional systems.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. An apparatus, comprising:
a housing having at least a scan body;
an image sensor disposed within the housing, the image sensor configured to read a barcode;
a scanning frame formed in a first bottom surface of the scan body, the scanning frame being configured to enable the image sensor to visually detect the barcode when the barcode is placed in a scanning zone at least partially below the scan body; and
a viewing frame formed in a first top surface of the scan body, the viewing frame being configured to enable a user to view the barcode through the viewing frame and the scanning frame when the barcode is placed in the scanning zone.

2. The apparatus of claim 1, wherein the housing further comprises a substantially-planar base and a trunk configured to connect the scan body to the base.

3. The apparatus of claim 2, wherein the trunk is connected to the base at a non-perpendicular angle so as to extend the scan body at least partially over the scanning zone.

4. The apparatus of claim 2, wherein the image sensor comprises a camera disposed in the trunk of the housing.

5. The apparatus of claim 4, further comprising a mirror disposed in the scan body, wherein the image sensor includes a reflected field of view directed downward from the mirror.

6. The apparatus of claim 1, wherein the image sensor is disposed in the scan body and includes a field of view directed downward through the scanning frame.

7. The apparatus of claim 1, wherein an edge of the first bottom surface is connected to an edge of the first top surface.

8. The apparatus of claim 7, wherein an angle formed between the first bottom surface and first top surface is acute.

9. The apparatus of claim 1, further comprising a transparent pane disposed in the viewing frame.

10. The apparatus of claim 1, wherein the image sensor comprises a camera configured for reading a barcode displayed on a mobile device.

11. The apparatus of claim 10, wherein the camera includes an imaging lens having a small f-stop number.
